**Europäisches Patentamt**

**European Patent Office**

**Office européen des brevets**

(19)

(11) Veröffentlichungsnummer : **0 091 566**
**B1**

(12) **EUROPÄISCHE PATENTSCHRIFT**

(45) Veröffentlichungstag der Patentschrift :
19.08.87

(51) Int. Cl.⁴ : **C 08 G 63/26,** C 08 G 63/74,
C 08 G 63/00, B 29 B 13/06

(21) Anmeldenummer : 83102468.2

(22) Anmeldetag : 12.03.83

(54) Verfahren und Vorrichtung zur Nachkondensation von Polykondensaten.

(30) Priorität : 02.04.82 DE 3213025

(43) Veröffentlichungstag der Anmeldung :
19.10.83 Patentblatt 83/42

(45) Bekanntmachung des Hinweises auf die Patenterteilung : 19.08.87 Patentblatt 87/34

(84) Benannte Vertragsstaaten :
BE CH FR GB IT LI NL

(56) Entgegenhaltungen :
DE-A- 1 770 410
DE-A- 1 779 521
DE-A- 1 957 333
DE-A- 2 723 549
DE-A- 3 012 692
US-A- 4 276 261

(73) Patentinhaber : KARL FISCHER INDUSTRIEANLAGEN
GMBH
Holzhauserstrasse 159
D-1000 Berlin 27 (DE)

(72) Erfinder : Gerking, Lüder, Dr.-Ing.
Amselstrasse 26
D-1000 Berlin 33 (DE)
Erfinder : Taurat, Dieter O., Chem.-Ing. (grad.)
Burgfrauenstrasse 123
D-1000 Berlin 28 (DE)

(74) Vertreter : Butenschön, Antje, Dr. et al
Patentanwälte PFENNING, MEINIG & PARTNER Kurfürstendamm 170
D-1000 Berlin 15 (DE)

## Beschreibung

Die Erfindung betrifft ein Verfahren zur Nachkondensation von Polykondensaten nach der Gattung des Hauptanspruchs, ferner eine Vorrichtung zur Durchführung der Nachkondensation von Polymeren, insbesondere Polyestern, wie Polyäthylenteraphthalat (PET), und Polyamiden 6 und 66. Die Nachkondensation von Polymeren findet zunehmende technische Anwendung bei der Herstellung von geeignetem Vormaterial für hochfeste technische Fäden und Hohlkörper. Zu letzteren zählen vor allem Flaschen aus PET für kohlensäurehaltige Flüssigkeiten.

Bei der Durchführung der Nachkondensation in fester Phase treten im wesentlichen zwei Probleme auf, denen die Apparate und die Verfahrensführung Rechnung zu tragen haben : Verklebung des Granulats durch partielles Schmelzen amorpher Anteile weit unterhalb des eigentlichen Schmelzpunktes, dieses besonders bei polyestern, wenn es nicht oder nur wenig kristallisiert ist, und die Entfernung von gasförmigen Reaktionsprodukten, bei polyestern vor allem Aldehyde. Diese müssen entfernt werden, wenn die die später aus ihm gefertigten Flaschen Getränke oder sonstige Lebensmittel enthalten, weil die Aldehyde den Geschmack beeinflussen können.

Die Feststoffkondensation der genannten Polymere, die in der Regel in Granulatform vorliegen, läßt sich sehr gut in drehenden Trommeltrocknern, solche sind als Taumeltrockner in weiter Verbreitung, durchführen. Die Verweilzeit aller Granulatteilchen ist streng gleich lang, etwaige Verklebungsneigungen können durch das ständige Bewegen des Trommelinhalts weitgehend verhindert, und durch das Anlegen von Vakuum oder durch eine Inertgasspülung können entweichende Reaktionsgase wie Aldehyde entfernt werden. Der Nachteil dieser erprobten Apparate liegt aber darin, daß sie neben der starken Umwälzung des Granulats und der damit verbundenen Stauberzeugung durch Abrieb nur diskontinuierlich betrieben werden können. Das bedeutet von vornherein hohen Energieverbrauch durch das abwechselnde Aufheizen und Abkühlen. Diese Apparate sind in der Anschaffung außerdem teuer und benötigen einen verhältnismäßig hohen Aufwand an Wartung und Personal zum Betreiben. Andererseits genügt ein einfacher Schacht, wie die US-PS 3 821 171 für die Nachkondensation von Polyamid vorschlägt, bei Polyester nicht, weil die starke Verklebungsneigung von amorphem oder wenig kristalliertem Polymer die Gefahr der Zusammensinterung des Granulates im oberen Teil des Trockners sehr groß ist.

Vorgeschlagene Verfahren, wie in der DE-AS 26 42 102, DE-AS 25 58 730, bei denen eine Zusammensinterung des PET absichtlich in Kauf genommen wird und diese im Austrag des Apparates durch Brechung und/oder Schal-Vorrichtung wieder aufgelöst wird, sind aufgrund des sehr hohen Energieverbrauchs, der starken Staubentwicklung und des hohen Wartungsaufwands für einen wirtschaftlichen Dauerbetrieb ungeeignet.

Es sind daher Verfahren vorgeschlagen worden, bei denen zunächst das Polymergranulat vorkristallisiert und dann kontinuierlich durch Einwirkung eines heißen Gasstromes, meistens Inertgas, in fester Phase nachkondensiert wird.

Derartige Verfahren werden in der DE-AS 25 59 290 und der DE-PS 22 12 768 beschrieben. Die Vorkristallisation soll dabei in einer Wirbelschicht stattfinden. Diese hat bekanntlich die Nachteile, daß die Polymerteilchen stark unterschiedliche Verweilzeit haben und der gesamte Vorgang verhältnismäßig energieaufwendig ist. Der wesentliche Nachteil besteht jedoch darin, daß mindestens zwei Apparate notwendig sind, was von sich aus die Investition erhöht, den Anlagenaufbau unnötig kompliziert und beim Transport von einer in die nächste Verfahrensstufe die Verweilzeitverteilung des Granulats verschlechtert.

Es ist daher auch in der DE-OS 27 23 549 vorgeschlagen worden, nur einen schachtförmigen Apparat zu verwenden und die Verklebungsneigung dadurch zu verhindern, daß Maschendrahtgewebe quer zur Hauptbewegungsrichtung des Granulats darin angeordnet sind. Hierbei ist jedoch Loch- bzw. Maschenweite und Abstand der Ebenen sehr vom Granulatdurchsatz abhangig, so daß sich bei jeder Leistungsänderung auch bei Änderung der Granulatform Eingriffe im Apparatinnern mit entsprechenden Stillstandszeiten ergeben.

Aufgabe der vorliegenden Erfindung ist es, ein einfaches Verfahren und eine einfache Vorrichtung zur Durchführung des Verfahrens der Nachkondensation von Polymeren (hier auch als Granulat bezeichnet, obwohl es sich ebenso um gröbere Pulver handeln kann), insbesondere von feuchten und amorphen Polymeren, zu schaffen, bei dem Trocknung und Nachkondensation in einem Apparat durchgeführt werden, ohne daß zwischen den einzelnen Zonen, in denen diese Prozesse stattfinden, Überleitungs- oder gar Förder- oder Dosierelemente eingebaut sind. Diese Vorrichtung soll zum Zwecke der Durchführung der Nachkondensation in fester Phase eine möglichst enge Verweilzeitverteilung der einzelnen Granulatteile aufweisen, sie soll die Verklebung während der thermischen Beanspruchung bei der Kristallisation und der späteren Trocknung und Nachkondensation verhindern, und es sollen die Reaktionsgase während der Nachkondensation abgeführt werden können. Als weitere Aufgabenstellung sollen der Energieverbrauch und der Verbrauch von Kreislauf(inert)gas möglichst gering sein, was ein einziger Apparat, verglichen mit mehreren, nacheinander geschalteten von vornherein besser löst. Die Stauberzeugung soll gering sein, und es soll die Möglichkeit bestehen, das Granulat, insbesondere vor Beginn der Nachkondensation, zu entstauben. Die Vorrichtung soll sich leicht an wechselnde Durchsatzleistungen anpassen lassen, ohne daß Betriebsunterbrechungen nötig werden.

Diese Aufgabe wird erfindungsgemäß durch die kennzeichnenden Merkmale des Hauptanspruchs und des nebengeordneten Vorrichtungsanspruchs in Verbindung mit den Merkmalen des Oberbegriffs gelöst. Vorteilhafte Ausgestaltungen sind in den Unteransprüchen 2 bis 6 bzw. 8-12 angegeben.

Durch das erfindungsgemäße Verfahren ist es in vorteilhafter Weise möglich, amorphes und feuchtes Polymer in Granulat-oder Pulverform in einem Reaktor zu trocknen und nachzukondensieren, wobei durch das im oberen Bereich des Reaktors vorgesehene Rührelement ein Verkleben einzelner Granulatteilchen verhindert wird. Eine Vorkristallisation des feuchten und amorphen Granulats in einem getrennten Reaktor ist nicht mehr notwendig. Durch die in den Unteransprüchen angegebenen Maßnahmen sind vorteilhafte Weiterbildungen und Verbesserungen möglich. Besonders vorteilhaft ist, daß die erfindungsgemäße Vorrichtung einen einfachen Aufbau aufweist und sich leicht an wechselnde Durchsatzleistungen anpassen läßt, so daß ein sehr wirtschaftlicher und kostengünstiger Betrieb möglich ist. Durch das nur taktweise Bewegen des Rührelements wird die Stauberzeugung verringert und unnötiger Abrieb wird vermieden.

Die erfindungsgemäße Vorrichtung ist in der Zeichnung dargestellt und wird im Zusammenhang mit dem erfindungsgemäßen Verfahren in der nachfolgenden Beschreibung näher erläutert. Es zeigen :

Figur 1 einen Längsschnitt durch die erfindungsgemäße Vorrichtung und

Figur 2 die erfindungsgemäße Vorrichtung innerhalb einer Gesamtanlage zur Durchführung des Verfahrens der Nachkondensation.

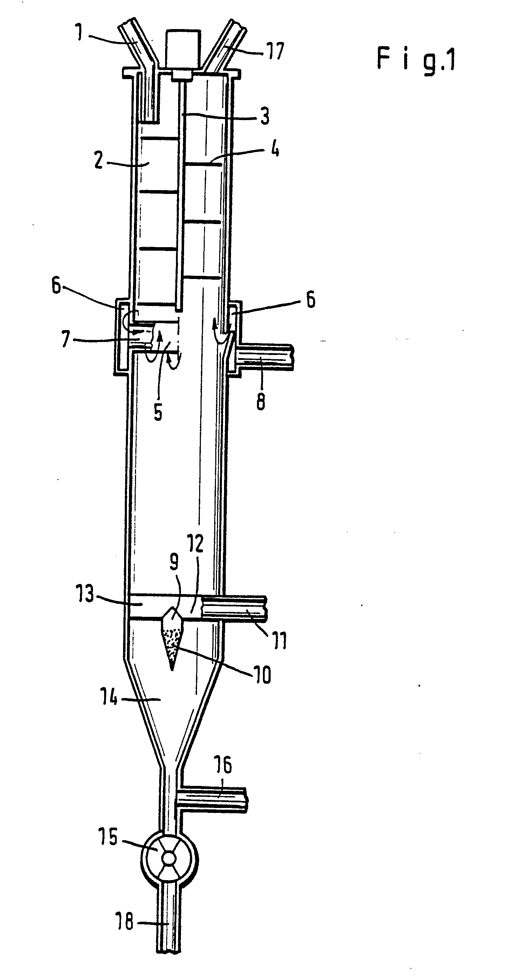

In Fig. 1 wird das Granulat durch ein Zulaufrohr 1 in den Reaktor 2 eingeführt. Im oberen Teil befinden sich Rührelemente, die das Granulat bewegen. Hier ist ein Rührer, bestehend aus einer drehbaren Welle 3 mit daran befestigten flachen Rührleisten 4 dargestellt. Andere Formen wie Siebteller und dergleichen sind ebenfalls möglich. Der Antrieb des Rührers erfolgt von außen in bekannter Weise. Das Granulat bewegt sich in dem Schacht nach unten. Etwa auf halber Höhe des zylindrischen Teiles des Schachtes befinden sich Einrichtungen für die Zufuhr von Heißgas. Solche Einrichtungen für die Zufuhr von Gasmengen in eine Granulatschüttung sind bekannt.

Beispielhaft wird hier im linken Teil des Schachtes die Gaszufuhr durch ein Verteilungskreuz 5 bewerkstelligt, bei dem aus einer äußeren Verteilungskammer 6 das Gas bei 7 durch die Schachtwandung in die Kreuzarme eintritt, nach unten ausströmt und dann weiter nach oben im Gegenstrom zum Granulatfluß strömt. Im rechten Teil des Schachtes der Fig. 1 ist beispielhaft angedeutet, daß das Gas wiederum aus der Verteilerkammer 6 über Öffnungen in der Schachtwand direkt in das Granulat einströmt und sich im weiteren Verlauf nach oben über den Querschnitt hin verteilt. Die Verteilerkammer 6 wird von der Zufuhrleitung 8 gespeist.

Unten, etwa am Ende des zylindrischen Teils des Schachtes, befindet sich eine weitere Einrichtung zur Zufuhr von Heißgas. Sie ist durch 9, einen kegelförmigen Körper, dargestellt, durch dessen Wandöffnungen 10 das Heißgas entströmt und sich nach oben über die Granulatschüttung verteilt.

Die Zufuhr des Heißgases erfolgt aus der Leitung 11 über die Verbindungsleitung 12 bis zum kegelförmigen Körper 9. Aus Symmetriegründen und um den Körper 9 zu befestigen, sind weitere Verstrebungen 13 angebracht.

Der Schacht ist in seinem zylindrischen Teil beheizt, entweder durch hier nicht gezeigte elektrische Heizbandagen oder in bekannter Weise durch ein Wärmeträgermedium, welches zwischen der Wand des Reaktors 2 und einem hier nicht gezeigten Außenmantel strömt. Die gleichmäßige Beheizung durch besondere Maßnahmen im Strömungsverlauf des Wärmeträgermediums sind bekannt und brauchen hier nicht weiter erörtert zu werden. Die Beheizung des Mantels kann im oberen Teil dort enden, wo das Granulat seinen höchsten Füllstand hat. Das ist etwa das Ende des Einfüllrohres 1. Im unteren Teil wird die Beheizung etwas über die untere Gaszufuhr hinweggeführt. Anschließend braucht nicht mehr geheizt zu werden. Im unteren Bereich 14 schnürt sich der Schacht ein. Das Granulat wird mittels einer Austragvorrichtung 15, zum Beispiel einer Zellradschleuse, ausgetragen. Zwischen der Austragvorrichtung und der Zellradschleuse ist durch die Rohreinführung 16 die Zufuhrmöglichkeit für Frischgas angedeutet. Das hier eingeführte Frischgas strömt überwiegend nach oben und man benutzt bei 15 möglichst gasdichte Austragsvorrichtungen. Durch das Frischgas findet eine Kühlung des Granulats statt. Wird die Beheizung des Schachtmantels im unteren Bereich 14 fortgelassen und auch dieser Teil nicht wärmeisoliert, so findet bereits hierdurch eine erste Kühlung des Granulats statt.

Frischgas strömt dem Schachtreaktor durch die Rohrleitung 16 zu. Bei den meisten Verfahren zur Nachkondensation von Polymeren verwendet man Inertgase, wie zum Beispiel Stickstoff. Diese werden aus wirtschaftlichen Gründen im Kreislauf geführt. Es treten aber Leckmengen in diesen Kreisläufen auf. Im Bereich der erfindungsgemäßen Vorrichtung entweichen bestimmte Leckgasmengen durch das Zufuhrrohr 1 und auch durch das Abfuhrrohr 18 unterhalb der Austragsvorrichtung 15.

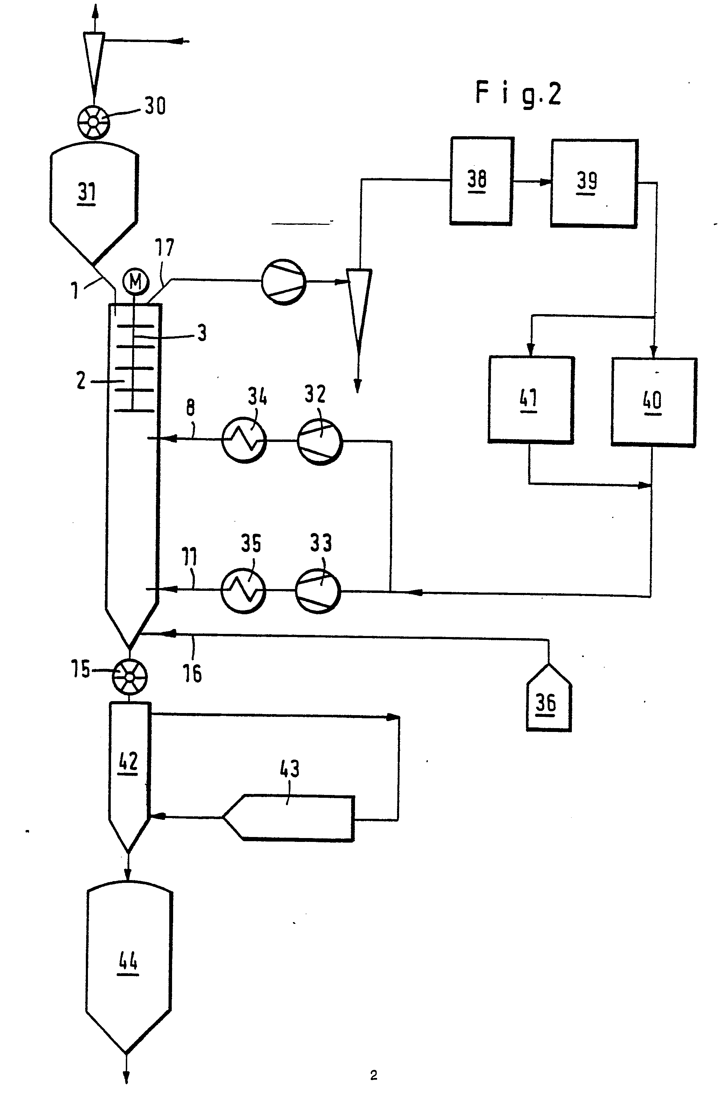

Fig. 2 zeigt die Verwendung der erfindungsgemäßen Vorrichtung in einer Gesamtanlage zur Nachkondensation von Polymergranulat. Über eine Dosier- und Gasabsperreinrichtung 30 wird das feuchte, amorphe oder nur wenig kristallisierte Granulat so, wie es von der Polymerherstellung kommt, in einen Vorlagebehälter 31 eingefüllt und läuft selbsttätig durch das Zufuhrrohr 1 in den Schachtreaktor 2. Heißgaszuführungen 8 und 11 werden über Gebläse 32 und 33 und nachgeschaltete Wärmetauscher 34 und 35 gespeist. Die Frischgaszufuhr 16 wird, wie hier gezeigt, von einem Flüssigstickstoffbehälter 36 gespeist. Das durch die Verbindungsleitung 17 entströmende Gas wird über Gebläse (Pumpen) zunächst von Staubanteilen über Zyklone 37 und/ oder Feinfilter 38 gereinigt, anschließend wird die hier nur schaltbildmäßig bei 39 angedeutete Abscheidung von Äthylenglykol (EG) und Acetaldehyd durchgeführt. Darauf erfolgt die Trocknung des Gases von Wasser bei 40, welches im oberen Teil der Vorrichtung 2 während der Trocknung dem Granulat entzogen worden ist. Häufig wird auch die Anreicherung des Gases durch Sauerstoff, welcher durch Undichtigkeiten des Gaskreislaufs, auf jeden Fall aber mit dem Granulat, immer wieder in den Kreislauf hineingelangt, durch entsprechende bekannte Methoden bei 41 entfernt.

Das Gas verzweigt sich dann, wie hier gezeigt, zu den beiden Gebläsen 32 und 33 und strömt durch die untere und obere Gaszuführung 11 und 8 in den Schachtreaktor wieder zurück.

Hier ist nur eine Schaltungsmöglichkeit des Kreislaufs gezeigt. Eine andere besteht darin, daß man das entstaubte Gas hinter den Filtern 37, 38 direkt dem Gebläse 32 zuführt, wodurch es direkt wieder in den mit Granulat gefüllten Schacht gelangt und nur den anderen Teil stetig von störenden Gasbeimengen und Wasser reinigt.

Das über 1 eingefüllte Granulat verteilt sich durch die Wirkung des bewegten Rührorgans flach über den gesamten Querschnitt. Es beginnt die Aufheizung des Granulats, gleichzeitig setzen die Vortrocknung und die Kristallisation ein. Danach erfolgen die Trocknung und die Nachkondensation etwa im Bereich der oberen Gaszufuhr 8, auf jeden Fall aber unterhalb derselben. Die Bereiche, in denen diese vier Grundoperationen stattfinden, sind im Unterschied zu anderen bekanntgewordenen Verfahren mit der erfindungsgemäßen Vorrichtung nicht streng voneinander getrennt. Es bestehen vielmehr Übergangsbereiche zwischen ihnen. Unterhalb der Austragsvorrichtung 15 kann eine Kühlstrecke, hier gezeigt durch einen schlanken Zwischenbehälter 42, angeordnet sein. Hier kann das Granulat außer durch Konvektion mit der umgebenden Atmosphäre über die Behälterwand durch ein Gas abgekühlt werden. Wenn im unteren Bereich des Schachtreaktors 2, wie oben beschrieben, bereits eine Vorkühlung stattgefunden hat, so kann man hier mit trockener Luft kühlen. Ein Kreislauf ist durch das Leitungssystem 43 schematisch angedeutet. Das Granulat wird dann über Silos 44 und dergleichen forttransportiert. Es kann jedoch auch direkt der Verformung, bei PET-Granulat zum Beispiel zu Flaschen, zugeführt werden. In diesem Fall braucht es nur direkt und ohne Abkühlung der Blasmaschine zugeführt zu werden.

Beispiel 1

Polyäthylenterephthalat (PET) wurde als Granulat mit den Abmessungen $5 \times 4 \times 2$ mm oder $4 \oslash \times 4$ mm einem erfindungsgemäßen Schachtreaktor 2 zugeführt. Das Granulat befand sich unter der Gleichgewichtsfeuchte von etwa 0,1 bis 0,2 Gew.-% und warwenig kristallin, praktisch amorph. Die Lösungs-Viskosität (intrinsic viscosity i. v.) des Granulats betrug 0,62, gemessen in Phenol-Tetrachloraethan (1 : 1) bei 20° C. Im oberen Teil des Schachtreaktors wurde das Granulat zusätzlich zu seiner Abwärtsbewegung von einem Rührer mit einer Drehzahl von 3 Umdrehungen/min bewegt. Eine Verklebung des Granulats trat nicht auf, auch nicht, wenn der Rührer nur taktweise in Abständen von 1 min während etwa 2 bis 3 min bewegt wurde.

Als Inertgas wurde Stickstoff ($N_2$) bei 8 mit einer Temperatur von 230° C und bei 11 mit 245° C zugeführt. Das Verhältnis von Granulatmenge zu Inertgasmenge, jeweils gewichtsbezogen, betrug 0,2 : 1. Die Verweilzeit des Granulats vom Eintritt in den Schachtreaktor 2 bei 1 und Austritt unterhalb des Austragsorgans bei 18 betrug 5 Stunden. Die Viskosität des Granulats hatte sich von anfänglich 0.62 auf 0.79 erhöht.

Das Granulat eignete sich ohne weitere Nachbehandlung zur direkten Verformung zu Flaschen für kohlensäurehaltige Getränke.

**Patentansprüche**

1. Verfahren zur Nachkondensation von Polykondensaten, wie Polyestern, bei dem das insbesondere amorphe und feuchte polymer in Granulat- oder Pulverform in einen Reaktor stetig eingeführt wird, sich durch die Schwerkraft nach unten bewegt und im Gegenstrom ein heißes Gas geführt wird, dadurch gekennzeichnet, daß im oberen Bereich des als durchgehender Schacht ausgebildeten einzigen Reaktors die Kristallisation mit einer gleichzeitigen Vortrocknung durchgeführt wird, wobei durch Rührbewegungen das Granulat relativ zu seiner Abwärtsbewegung bewegt wird, und daß anschließend ohne Trennung im weiteren Bereich des Schachtes die Trocknung und die Nachkondensation des Granulats erfolgt.

2. Verfahren nach Anspruch 1, dadurch gekennzeichnet, daß ein erster heißer Gasstrom unten in den Schacht und ein zweiter heißer Gasstrom mit in der Regel tieferer Temperatur oberhalb des ersten ungefähr auf halber Höhe des Schachtes eingeführt wird.

3. Verfahren nach Anspruch 1 oder Anspruch 2, dadurch gekennzeichnet, daß das Granulat unterhalb der Zufuhr des ersten Gasstromes abgekühlt wird.

4. Verfahren nach einem der Ansprüche 1 bis 3, dadurch gekennzeichnet, daß die Menge des zweiten Gasstromes in der Weise bemessen wird, daß Feinstaubanteile fortgeführt werden.

5. Verfahren nach einem der Ansprüche 2 bis 4, dadurch gekennzeichnet, daß die Gaszufuhr im Kreislauf geführt wird und nach dem Austritt aus dem Reaktor von Feuchtigkeit, von Reaktionsgasen, Staub und von die Reaktion störenden Gasen befreit wird.

6. Verfahren nach Anspruch 5, dadurch gekennzeichnet, daß zum Ersetzen der Verlustgasmengen innerhalb des Kreislaufs und zum Kühlen des Polykondensats Frischgas unterhalb der Zufuhr des ersten Gasstroms in den Reaktor eingeführt wird.

7. Vorrichtung zur Durchführung des Verfahrens nach Anspruch 1, dadurch gekennzeichnet, daß der einzige Reaktor (2) als durchgehender Schacht ausgebildet ist, in dessen oberem Teil ein Rührelement (3, 4) angeordnet ist und der mindestens eine Gaszufuhrleitung (8, 11) aufweist und daß außen auf dem durchgehenden Schacht eine Heizung angeordnet ist.

8. Vorrichtung nach Anspruch 7, dadurch gekennzeichnet, daß der Schacht zylinderförmig ausgebildet ist und in einen zum Austrag hin kegelförmigen Teil (14) übergeht.

9. Vorrichtung nach Anspruch 7 oder 8, dadurch gekennzeichnet, daß oberhalb des kegelförmigen Teils (14) eine Gaszufuhrleitung (11) für den ersten Gasstrom und ungefähr in der Mitte des zylinderförmigen Schachts eine Gaszufuhrleitung (8) für den zweiten Gasstrom angeordnet sind.

10. Vorrichtung nach einem der Ansprüche 7 bis 9, dadurch gekennzeichnet, daß zum Reinigen des durch den Schacht durchgeströmten Gases eine Staubabscheideeinrichtung (37, 38), eine Trockenvorrichtung (40) und eine Einrichtung (41) zum Entfernen des Störgases vorgesehen sind, die mit den jeweiligen Gaszufuhrleitungen (8, 11) verbunden sind.

11. Vorrichtung nach Anspruch 10, dadurch gekennzeichnet, daß die Zufuhrleitung (8) des zweiten Gasstroms direkt mit der Staubabscheideeinrichtung (37, 38) verbunden ist.

12. Vorrichtung nach einem der Ansprüche 7 bis 11, dadurch gekennzeichnet, daß das Rührelement eine drehbare Welle (3) und daran befestigte Rührleisten (4) umfaßt.

## Claims

1. A process for the postcondensation of polycondensates such as polyesters, wherein the polymer, especially amorphous, moist polymer, is continuously introduced in granule or powder form into a reactor, moves downwards by gravitational force, and a hot gas is passed countercurrently to it, characterized in that crystallisation in the upper zone of the single reactor, which is designed as a continuous shaft, is accompanied by simultaneous predrying, the granulates being moved by agitating movements relative to their downward motion, and that drying and postcondensation of the granulates then takes place in the lower zone of the shaft without separation.

2. The process according to claim 1, characterised in that a first hot gas stream is introduced at the base of the shaft and a second hot gas stream, generally at a lower temperature, is introduced above the first roughly halfway up the shaft.

3. The process according to claim 1 or 2, characterised in that the granulates are cooled below the first gas stream entry.

4. The process according to any of claims 1 to 3, characterised in that the quantity of the second gas stream is calculated such that dust fines are conducted away.

5. The process according to any of claims 2 to 4, characterised in that the gas is supplied in a cycle and moisture, reaction gases, dust and gases that interfere with the reaction are eliminated from it after it leaves the reactor.

6. The process according to claim 5, characterised in that to replace the gas lost in the cycle and to cool the polycondensate refining gas is fed into the reactor below the first gas stream entry.

7. An apparatus for carrying out the process according to claim 1, characterised in that the single reactor (2) is designed as a continuous shaft in the upper zone of which is arranged a stirring element (3, 4) and which exhibits at least one gas supply line (8, 11), and that a heater is disposed on the exterior of the continuous shaft.

8. The apparatus according to claim 7, characterised in that the shaft is cylindrical in design and passes into a conical section (14) towards the discharge end.

9. The apparatus according to claim 7 or 8, characterised in that above the conical section (14) is disposed a gas supply line (11) for the first gas stream and roughly midway down the cylindrical shaft is disposed a gas supply line (8) for the second gas stream.

10. The apparatus according to any of claims 7 to 9, characterised in that to clean the gas passing through the shaft there are provided a dust collecting device (37, 38), a drying apparatus (40) and a device (41) for removing the foreign gas, which are connected to the respective gas supply lines (8, 11).

11. The apparatus according to claim 10, characterised in that the supply line (8) of the second gas stream is connected direct to the dust collecting device (37, 38).

12. The apparatus according to any of claims 7 to 11, characterised in that the stirring element includes a rotatable shaft (3) and stirrer bars (4) attached thereto.

## Revendications

1. Procédé de post-condensation de polycondensats, tels que les polyesters, selon lequel un polymère, en particulier un polymère amorphe et humide, est introduit dans un réacteur de manière continue et sous la forme d'un produit granulé ou de poudre et descend dans le réacteur sous l'effet de la gravité, un gaz chaud étant introduit à contre-courant dans le réacteur, caractérisé par le fait que le produit granulé est soumis, dans la partie supérieure du réacteur unique réalisé en forme de cheminée à transit continu, à une cristallisation accompagnée d'un préséchage simultané, le produit granulé étant brassé par un agitateur d'une manière relative par rapport à son écoulement vers le bas, et par le fait qu'il est ensuite séché et post-condensé dans la partie inférieure du réacteur, sans interruption dans le déroulement du procédé.

2. Procédé suivant la revendication 1, caractérisé en ce qu'un premier courant de gaz chaud est introduit dans la partie basse de la cheminée, et en ce qu'un deuxième courant de gaz est introduit au-dessus du premier, en général à une température inférieure à celui-ci, environ à mi-hauteur de la cheminée.

3. Procédé suivant les revendications 1 ou 2, caractérisé en ce que le produit granulé est refroidi dans la partie de la cheminée située en dessous de l'admission du premier courant de gaz.

4. Procédé suivant l'une des revendications 1 à 3, caractérisé en ce que le deuxième courant de gaz est réglé de manière que la quantité de gaz admise entraîne les poussières fines.

5. Procédé suivant l'une des revendications 2 à 4, caractérisé en ce que le gaz qui est injecté dans la cheminée circule en circuit fermé, est séché à sa sortie du réacteur et épuré des gaz de réaction, des poussières et des gaz défavorables à la réaction qu'il peut contenir.

6. Procédé suivant la revendication 5, caractérisé en ce que l'on injecte du gaz frais en dessous de l'admission du premier courant de gaz, dans le double but de compenser les pertes de gaz dans le circuit et de refroidir le polycondensat.

7. Dispositif de mise en œuvre du procédé conforme à la revendication 1, caractérisé en ce que le réacteur unique (2) est réalisé en forme de cheminée à transit continu, en ce qu'un agitateur (3, 4) est disposé dans sa partie supérieure, en ce que la cheminée est équipée d'au moins une canalisation d'injection de gaz (8, 11) et en ce qu'elle est entourée d'un système de chauffage.

8. Dispositif suivant la revendication 7, caractérisé en ce que la cheminée est de forme cylindrique et se termine par une trémie conique (14).

9. Dispositif suivant les revendications 7 ou 8, caractérisé en ce qu'une admission de gaz (11) pour le premier courant est disposée au-dessus de la trémie (14) et en ce qu'une admission (8) pour le deuxième courant de gaz est disposée environ à mi-hauteur de la partie cylindrique de la cheminée.

10. Dispositif suivant l'une des revendications 7 à 9, caractérisé en ce qu'une installation de dépoussiérage (37, 38), une installation de séchage (40) et une installation de séparation des gaz indésirables (41) sont reliées aux canalisations (8, 11) des circuits de gaz, dans le but d'épurer le gaz à sa sortie de la cheminée.

11. Dispositif suivant la revendication 10, caractérisé en ce que la canalisation (8) du deuxième courant de gaz est reliée directement à l'installation de dépoussiérage (37, 38).

12. Dispositif suivant l'une des revendications 7 à 11, caractérisé en ce que l'agitateur se compose d'un arbre rotatif (3) et des pales (4) qui y sont fixées.

F i g.1

F i g.2